# EUROPEAN PATENT SPECIFICATION

(11) **EP 4 143 265 B1**
(45) Date of publication and mention of the grant of the patent: **04.06.2025**
(21) Application number: 21726791.3
(22) Date of filing: 30.04.2021
(51) Int. Cl.: C09D 5/18

(54) **INTUMESCENT COATINGS**
INTUMESZIERENDE BESCHICHTUNGEN
REVÊTEMENTS INTUMESCENTS

(30) Priority: 01.05.2020 US 202063018812 P; 15.03.2021 US 202163161214 P
(43) Date of publication of application: 08.03.2023
(60) Divisional application: 25160222.3
(73) Proprietor: PPG Industries Ohio, Inc., Cleveland, OH 44111 (US)
(72) Inventor: MA, Shuang, 2153 CS Nieuw-Vennep (NL); HULSEBOS, Kevin, 1106 EH Amsterdam (NL)
(74) Representative: f & e patent
(86) International application number: PCT/US2021/030061
(87) International publication number: WO 2021/222685

(56) References cited:
- WO-A1-02/096996
- WO-A1-2006/067478
- WO-A1-2013/179218
- WO-A1-2020/079401
- GB-A- 2 246 136
- US-A- 4 879 320

## Description

### FIELD OF THE INVENTION

The present invention is directed to an intumescent coating composition, to a method for coating a substrate with said composition, to a substrate coated with said composition, to an article comprising said substrate, including batteries.

### BACKGROUND OF THE INVENTION

Intumescent coatings have been used for a variety of structural applications to protect against both cellulosic and hydrocarbon fires. Such coatings offer protection by forming a carbonaceous char upon exposure to intense heat. The char that forms in a fire provides optimal protection when the char expands to optimum thickness and adheres to the substrate and/or when the char forms at a thickness such that direct flame blow will not undermine the char integrity, such as by leaving cracks on the char. Numerous substrates may benefit from being coated with such coatings, including structural building components used, for example, in commercial and transportation infrastructures like hotels, airports, concert halls or off-shore sites, chemical plants, oil rigs, and the like, that would be exposed to extreme heat in the case of fire. Batteries, such as lithium ion batteries, may also be exposed to such intense heat; many batteries and particularly lithium ion batteries are vulnerable to thermal runaways during which heat and gas are rapidly discharged from a battery and a fire hazard is created. Conventional single pack fire protection coatings are not durable for weathering while two pack fire protection coatings are too viscous to apply at low thicknesses; improved fire resistant coatings, including those used for batteries, are therefore desired.

WO 2020/079401 A1 relates to curable mixtures providing an intumescent coating material. The curable mixtures are based on a silicone polymer, a cross-linker therefor, a diluent and an intumescent ingredient.

WO 2013/179218 A1 relates to certain fire and heat resistant compositions for providing or improving the fire resistance of an interior or exterior surface, in particular a fire-resistant paint.

WO 2006/067478 A1 relates to a liquid intumescent resin coating composition comprising a resin system having at least one polymeric component, at least one ethylenically unsaturated monomeric component, an intumescent component and at least one of sodium potassium aluminum silicate (nepheline syenite) and/or potassium aluminum silicate, the liquid coating composition being curable to a solid state by free radical polymerization.

WO 02/096996 A1 relates to intumescent powder coating compositions containing a polymer resin, particularly polyetheramine-type thermoplastic polymer resin, and intumescent ingredients for coating steel.

GB 2 246 136 A relates to phosphate-catalyzed intumescent coatings, wherein TiO₂ pigmentation is replaced by certain precipitated aluminum silicate hydrates.

US 4,879,320 A relates to a fire-retardant coating material comprising a liquid intumescent material and refractory fibers dispersed or suspended therein, the refractory fibers consisting of aluminum oxide, silicon dioxide and one or more other metal oxides.

WO 94/02545 A1 relates to intumescent compositions that include a saline soluble inorganic silicate fibrous material containing CaO, MgO and no more than 4% by weight of Al₂O₃.

### SUMMARY OF THE INVENTION

The present invention is directed to a coating composition comprising: a) a film-forming component, wherein the film-forming component comprises an epoxy resin and optionally a crosslinker therefor; b) a phosphate source; c) a borate source; an aluminum source; and/or a silica source; d) TiO₂; and e) a gas source; wherein the TiO₂ is present in an amount of 5 to 20 wt %, such as 9 to 15 wt %, the phosphate source is present in an amount of 25 to 55 wt %, such as 25 to 40 wt % or 40 to 55 wt %, and wherein if component c comprises a borate source, it is present in an amount of 5 to 20 wt %, such as 9 to 15 wt %, if component c comprises an aluminum source, it is present in an amount of 0.1 to 10 wt %, such as 0.2 to 8 wt %, and if component c comprises a silica source, it is present in an amount of 0.1 to 2 wt %, such 0.4 to 1 wt %, with wt % based on the total solid weight of the composition. The compositions can be formed into a self-supporting film or sheet. Methods of coating substrates making use of the coating composition according to the present invention or a film or sheet formed therefrom as described herein and substrates coated thereby as well as articles comprising such coated substrates/films or sheets as set forth in the appended claims are also within the scope of the present invention, including battery components and batteries coated at least in part with the present compositions and batteries comprising self-supporting films or sheets of the present invention.

The present invention will be discussed in more detail below.

### BRIEF DESCRIPTION OF THE DRAWINGS

Table 1 includes photographs of substrates coated with experimental or comparative intumescent coating compositions of Formulations 1-13 after the coated substrates were subjected to a 1200±50°C torch fire for 10 minutes. Formulation 6 also includes a side view of the coated panel after being subjected to torch fire.

### DETAILED DESCRIPTION OF THE INVENTION

The present invention is directed to a coating composition comprising: a) a film-forming component; b) a phosphate source; c) a borate source; an aluminum source; and/or a silica source; d) TiO₂; and e) a gas source; wherein the TiO₂ is present in an amount of 5 to 20 wt %, such as 9 to 15 wt %, the phosphate source is present in an amount of 25 to 55 wt %, such as 25 to 40 wt % or 40 to 55 wt %, and wherein if component c comprises a borate source, it is present in an amount of 5 to 20 wt %, such as 9 to 15 wt %, if component c comprises an aluminum source, it is present in an amount of 0.1 to 10 wt %, such as 0.2 to 8 wt %, and if component c comprises a silica source, it is present in an amount of 0.1 to 2 wt %, such 0.4 to 1 wt %, with wt % based on the total solid weight of the composition. It will be appreciated that total solid weight of the composition when uncured will be the same as that when cured.

The present coating compositions can be used to form intumescent coatings. That is, the coatings undergo swelling and charring when exposed to heat, such as the high temperatures experienced during a fire. The present inventors have discovered that use of a borate source, aluminum source and/or silica source in conjunction with TiO₂ and a phosphate source, in the ranges given above, surprisingly gives an intumescent coating having desirable char formation in conjunction with desirable adhesion to the substrate. By "desirable char formation" is meant the char cannot be easily cracked or removed by direct flame blow and the expansion coefficient, which is the ratio between thickness of char and thickness of coating film, may be from 5 to 25, such as from 7 to 20. By "desirable adhesion" is meant char will substantially remain intact during a direct flame blow, and no obvious detachment of char from the substrate occurs during or after a fire test. Thus, the coating composition according to the present invention provides advantages over conventional intumescent coating compositions.

The coating compositions comprise a film-forming component. "Film-forming" means that the composition, upon drying and/or curing, can form a continuous film on a surface. A film-forming component may include, for example, a film-forming resin and a crosslinker therefor. A film-forming resin can react with itself, that is, undergo a self-crosslinking reaction, or can react with a crosslinker to form a film. Such reactions may occur at ambient or elevated temperature. "Crosslinker" and like terms, curing agent and hardener may be used interchangeably herein.

According to the present invention, the film-forming component comprises an epoxy resin and optionally a crosslinker therefor. Optionally, any other suitable resin or combination of resins can additionally be used in the film-forming component, including, but not limited to, acrylic resins, polysiloxane resins, polyurethane resins, polyurea resins, polyvinyl resins, phenolic resins, urea-formaldehyde resins, polyimide resins, melamine resins, polyester resins and cyanate resins.

Film-forming resins used according to the present invention contain one or more functional groups that either react with each other or with the functional groups on the crosslinker. Examples of suitable functional groups include, for example, ketone, hydrazide, carbodiimide, oxazoline, epoxy, amine, vinyl, amide, carbamate, urea, mercaptan, carboxylic acid, (meth)acryloyl, isocyanate, alkoxysilyl, anhydride, hydroxyl, and alkoxy groups, functional groups and combinations thereof.

Suitable functional groups that are capable of reacting with each other include, for example, N-methylolamide groups; silane groups having silicon bonded hydrolysable or condensable groups, for example chloro, hydroxy, alkoxy, acetoxy and/or ketoximo groups; ethylenically unsaturated fatty acid groups for example capable of oxidative drying; azomethine groups; azetidine groups; and groups capable of thermally reversible Diels-Alder reaction, for example furan/maleimide. If the resin contains functional groups that are capable of reacting with each other, it is considered self-crosslinking and the presence of a curing agent is not necessary to provide the present intumescent compositions.

The resin may also contain a combination of functional groups that are capable of reacting with each other (self-crosslinking) and functional groups that are reactive with the functional groups of the curing agent. In such cases, a curing agent may be present; upon cure, two crosslinking mechanisms will occur- the reaction between functional groups on the crosslinker and the resin and the self-crosslinking reaction of the resin itself.

Suitable epoxy resins for use in the present invention comprise at least one polyepoxide. The polyepoxide typically has at least two 1,2-epoxy groups. The epoxy equivalent weight of the polyepoxide may range from 80 to 6000, such as 100 to 700. Epoxy compounds can be saturated or unsaturated, cyclic, aliphatic, alicyclic, aromatic or heterocyclic. They may comprise substituent(s), such as halogen, hydroxy, and ether groups.

Examples of suitable polyepoxides are those having more than one or usually two 1,2-epoxy equivalents; i.e., polyepoxides having two epoxy groups per molecule in average. The most commonly used polyepoxides are, for example, polyglycidyl ether of polyphenols, such as 2,2-bis(4-hydroxyphenyl)propane (bisphenol A), resorcinol, hydroquinone, benzenedimethanol, phloroglucinol, bisphenol F, and catechol; or polyglycidyl ether of polyols, such as alicyclic polyols, such as 1,2-cyclohexane diol, 1,4-cyclohexane diol, 2,2-bis(4-hydroxycyclohexyl)propane, 1,1-bis(4-hydroxycyclohexyl)ethane, 2-methyl-1,1-bis(4-hydroxycyclohexyl)propane, 2,2-bis(4- hydroxy-3-tert-butylcyclohexyl)propane, 1,3-bis(hydroxymethyl)cyclohexane and 1,2-bis(hydroxymethyl)cyclohexane. The examples of aliphatic polyols include, in particular, trihydroxymethylpentane diol, ethylene glycol, diethylene glycol, triethylene glycol, 1,2-propylene glycol, 1,4-butyleneglycol, 1,5-pentanediol, 1,2,6-hexanetriol, cyclohexanedimethanol, glycerol, trimethylolpropane, hydrogenated bisphenol A, hydrogenated bisphenol F or polyether glycols, for example, poly(oxytetramethylene) glycol, poly(oxyethylene) glycol, poly(oxypropylene) glycol and neopentane diol.

Another group of suitable epoxy resins include polyglycidyl ethers of polycarboxylic acids, formed by the reaction of an epoxy compound such as epichlorohydrin with an aliphatic or aromatic polycarboxylic acid such as oxalic acid, succinic acid, glutaric acid, terephthalic acid, 2,6-napthalene dicarboxylic acid, or dimerised linoleic acid. Such resins are commercially available from Hexion Inc. in their EPIKOTE and EPON lines.

Other suitable epoxy resins that can be used according to the present invention comprise epoxidized olefinically unsaturated alicyclic materials such as epoxy alicyclic ethers and esters, epoxy resins containing oxyalkylene groups, epoxy novolac resins, which are prepared by reacting an epihalohydrin with the condensation product of an aldehyde with a monohydric or polyhydric phenol such as epoxy phenol novolac resins or epoxy cresol novolac resins.

Furthermore, it can be advantageous according to the present invention to employ a flexible polyepoxide resin as a polyepoxy-functional compound of the intumescent compositions of the present invention. These resins are generally essentially linear materials, although a small amount of branching is tolerated. Exemplary of suitable materials are epoxidized soybean oil, dimer acid-based materials such as EMPOL 1010 resin, which is commercially available from BASF SE, Ludwigshafen, Germany, and rubber-modified polyepoxide resins such as the product prepared from a polyglycidyl ether of bisphenol A and an acid-functional polybutadiene.

Other suitable examples of flexible polyepoxides for use according to the present invention include an epoxy-functional adduct, which is prepared from a flexible acid-functional polyester and polyepoxide. The acid-functional polyester can have an acid value of at least 10 mg KOH/g, such as 140 to 350 mg KOH/or 180 to 260 mg KOH/g, as determined by ASTM 974-87.

Linear polyesters may be more suitable than branched polyesters for use herein. Acid-functional polyesters can be prepared by the polyesterification of an organic polycarboxylic acid or anhydride thereof with an organic polyol. The polycarboxylic acids and polyols can be aliphatic or aromatic dibasic acids and diols.

The diols that may be used in making the polyester include alkylene glycols, such as ethylene glycol, diethylene glycol, neopentyl glycol and other diols such as hydrogenated bisphenol A, cyclohexanediol, cyclohexanedimethanol, caprolactonediol, for example, the reaction product of epsilon-caprolactone and ethylene glycol, hydroxy-alkylated bisphenols, polyether glycols, for example, poly(oxytetramethylene) glycol, poly(oxyethylene) glycol, poly(oxypropylene) glycol and the like. Polyols of higher functionality can also be used although diols may be more suitable. Examples include trimethylolpropane, trimethylolethane, pentaerythritol, glycerol, isosorbide, tetramethyl cyclobutane diol and the like, as well as higher molecular weight polyols such as those produced by oxyalkylating lower molecular weight polyols.

The acid component of the polyester may comprise monomeric dicarboxylic acids or anhydrides having 2 to 36 carbon atoms per molecule. Suitable acids include, for example, phthalic acid, isophthalic acid, terephthalic acid, tetrahydrophthalic acid, hexahydrophthalic acid, adipic acid, azelaic acid, sebacic acid, maleic acid, glutaric acid, chlorendic acid, tetrachlorophthalic acid, tetrabromomphthalic acid, decanedioic acid, dodecanedioic acid, rosin acids, diphenolic acid, gallic acid, and other dicarboxylic acids of varying types, for example, Diels-Alder adducts of unsaturated C₁₈ fatty acids.

The polyester may include minor amounts of monobasic acids such as benzoic acid, stearic acid, acetic acid, hydroxystearic acid and oleic acid. Also, there may be employed higher polycarboxylic acids such as trimellitic acid. Where acids are referred to above, it is understood that anhydrides of those acids that form anhydrides can be used in place of the acid. Also, lower alkyl esters of the acids such as dimethyl glutarate and dimethyl terephthalate can be used.

According to the present invention, a polyester used to make the epoxy-functional adduct may be prepared from a polycarboxylic acid component comprising a polycarboxylic acid or mixture of acids having from 7 to 16 carbon atoms and a polyol component comprising a portion of diethylene glycol.

The polyepoxides that may be used to prepare the epoxy-functional adduct of flexible acid-functional polyester and polyepoxide can be selected from those as defined above for the polyepoxide-functional component according to the present invention.

Other suitable polyepoxy-functional compounds are epoxy-functional acrylic resins. Such resins can be prepared by free-radical addition polymerization of (meth)acrylic monomers, optionally in combination with vinyl monomers or other monomers comprising at least one carbon-carbon double bond, wherein the monomer composition comprises at least one epoxy-functional compound having at least one carbon-carbon double bond.

Suitable epoxy-functional ethylenically unsaturated monomers include, for example, glycidyl (meth)acrylate, allyl glycidylether, vinyl glycidylether, vinyl cyclohexene oxide, limonene oxide, 2-ethylglycidylacrylate, 2-ethylglycidylmethacrylate, 2-(n-propyl)glycidylacrylate, 2-(n-propyl)glycidylmethacrylate, 2-(n-butyl)glycidylacrylate, 2-(n-butyl)glycidylmethacrylate, glycidylmethylmethacrylate, glycidylacrylate, (3',4'-epoxyheptyl)-2-ethylacrylate, (3',4'-epoxyheptyl)-2-ethylmethacrylate, (6',7'-epoxyheptyl)acrylate, (6',7'-epoxyheptyl)methacrylate, allyl-3,4-epoxyheptylether, 6,7-epoxyheptylallylether, vinyl-3,4-epoxyheptylether, 3,4-epoxyheptylvinylether, 6,7-epoxyheptylvinylether, o-vinylbenzylglycidylether, m-vinylbenzylglycidylether, p-vinylbenzylglycidylether, 3-vinyl cyclohexene oxide, alpha-methyl glycidyl methacrylate, 3,4-epoxycyclohexylmethyl (meth)acrylate and combinations thereof.

Suitable additional monomers for the preparation of the epoxy-functional acrylic resin include, for example, ethylenically unsaturated nitrile compounds; vinyl aromatic monomers; alkyl esters of ethylenically unsaturated acids; hydroxyalkyl esters of ethylenically unsaturated acids; amides of ethylenically unsaturated acids; ethylenically unsaturated acids; ethylenically unsaturated sulfonic acid monomers and/or ethylenically unsaturated phosphorous-containing acid monomers; vinyl carboxylates; conjugated dienes; monomers having at least two ethylenically unsaturated groups; and combinations thereof.

Examples of ethylenically unsaturated nitrile monomers that can be used for the preparation of the epoxy-functional acrylic resin include polymerizable unsaturated aliphatic nitrile monomers that contain from 2 to 4 carbon atoms in a linear or branched arrangement, which may be substituted either by acetyl or additional nitrile groups. Such nitrile monomers include acrylonitrile, methacrylonitrile, alpha-cyanoethyl acrylonitrile, fumaronitrile and combinations thereof, with acrylonitrile being particularly suitable.

Representative suitable vinyl-aromatic monomers include, for example, styrene, α-methylstyrene, p-methylstyrene, t-butylstyrene and vinyltoluene.

Esters of (meth)acrylic acid that can be used for the preparation of the epoxy-functional acrylic resin include n-alkyl esters, iso-alkyl esters or tert-alkyl esters of acrylic or (meth)acrylic acid in which the alkyl group has from 1 to 20 carbon atoms, the reaction product of methacrylic acid with glycidyl ester of a neoacid such as versatic acid, neodecanoic acid or pivalic acid and hydroxyalkyl (meth)acrylate and alkoxyalkyl (meth)acrylate monomers.

Suitable alkyl esters of (meth)acrylic acids may include, for example, C₁-C₂₀ alkyl (meth)acrylate, such as C₁-C₁₀-alkyl (meth)acrylates. Examples of such acrylate monomers include n-butyl acrylate, secondary butyl acrylate, methyl acrylate, ethyl acrylate, hexyl acrylate, tert-butyl acrylate, 2-ethyl-hexyl acrylate, isooctyl acrylate, 4-methyl-2-pentyl acrylate, 2-methylbutyl acrylate, methyl methacrylate, butyl methacrylate, n-butyl methacrylate, isobutyl methacrylate, ethyl methacrylate, isopropyl methacrylate, hexyl methacrylate, cyclohexyl methacrylate and cetyl methacrylate. Esters of (meth)acrylic acids, such as methyl (meth)acrylate, ethyl (meth)acrylate, propyl (meth)acrylate, butyl (meth)acrylate, 2-ethylhexyl (meth)acrylate and combinations thereof, are particularly suitable.

The hydroxy alkyl(meth)acrylate monomers that can be used for the preparation of the epoxy-functional acrylic resin include, for example, hydroxyalkyl acrylate and methacrylate monomers based on ethylene oxide, propylene oxide and higher alkylene oxides or mixtures thereof. Examples are hydroxyethyl acrylate, hydroxypropyl acrylate, hydroxyethyl methacrylate, hydroxypropyl methacrylate and hydroxybutyl acrylate. Particularly suitable is 2-hydroxy ethyl (meth)acrylate.

Amides of ethylenically unsaturated acids that can be used for the preparation of the epoxy-functional acrylic resin include, for example, acrylamide, methacrylamide, and diacetone acrylamide.

Vinyl ester monomers that can be used to prepare the epoxy-functional acrylic resin include vinyl acetate, vinyl proprionate, vinyl butyrate, vinyl benzoate, vinyl-2-ethylhexanoate, vinyl stearate, and the vinyl esters of versatic acid.

The ethylenically unsaturated carboxylic acid monomers suitable for the preparation of the epoxy-functional acrylic resin include, for example, monocarboxylic acid and dicarboxylic acid monomers and monoesters of dicarboxylic acid. Particularly suitable are ethylenically unsaturated aliphatic mono- or dicarboxylic acids or anhydrides that contain from 3 to 5 carbon atoms. Examples of monocarboxylic acid monomers include acrylic acid, methacrylic acid, crotonic acid and examples of dicarboxylic acid monomers include fumaric acid, itaconic acid, maleic acid and maleic anhydride. Examples of other suitable ethylenically unsaturated acids include vinyl acetic acid, vinyl lactic acid, vinyl sulfonic acid, 2-methyl-2-propene-1-sulfonic acid, styrene sulfonic acid, acrylamidomethyl propane sulfonic acid and the salts thereof. Suitable ethylenically unsaturated carboxylic acid monomers include (meth)acrylic acid, crotonic acid, itaconic acid, maleic acid, fumaric acid and combinations thereof.

Conjugated diene monomers suitable for the preparation of the epoxy-functional acrylic resin include conjugated diene monomers, such as 1,3-butadiene, isoprene, 2,3-dimethyl-1,3-butadiene, 2,3-dimethyl-1,3-butadiene, 2-chloro-1,3-butadiene, 1,3-pentadiene, 1,3-hexadiene, 2,4-hexadiene , 1,3-octadiene, 2-methyl-1,3-pentadiene, 2,3-dimethyl-1,3-pentadiene, 3,4-dimethyl-1,3-hexadiene, 2,3-diethyl-1,3-butadiene, 4,5-diethyl-1,3-octadiene, 3-butyl-1,3-octadiene, 3,7-dimethyl-1,3,6-octatriene, 2-methyl-6-methylene-1,7-octadiene, 7- methyl-3-methylene-1,6-octadiene, 1,3,7-octatriene, 2-ethyl-1, 3-butadiene, 2-amyl-1,3-butadiene, 3, 7-dimethyl-1,3,7-octatriene, 3,7-dimethyl-1,3,6-octatriene, 3,7,11-trimethyl-1,3,6,10-dodecatetraene, 7,11-dimethyl-3-methylene-1,6,10-dodecatriene, 2,6-dimethyl-2,4,6-octatriene, 2-phenyl-1,3-butadiene and 2-methyl-3-isopropyl-1,3-butadiene and 1,3-cyclohexadiene and combinations thereof.

It is also possible to use a combination of two or more, such as three or more or four or more, different polyepoxy-functional compounds in the film-forming component such as any of those disclosed above.

Suitable polyepoxy-functional compounds used according to the present invention may include, for example, diglycidyl ether of bisphenol A, diglycidyl ether of bisphenol F, resorcinol diglycidyl ether, epoxy phenol novolac resin, epoxy cresol novolac resins, epoxy functional (poly)siloxanes, epoxy functional polysulfides, epoxy-functional adducts of acid-functional polyesters and polyepoxides, for example, those that are described above. The acrylic resins used in the present invention may include, for example, copolymers of one or more alkyl esters of acrylic acid or methacrylic acid, optionally together with one or more other polymerizable ethylenically unsaturated monomers. Useful alkyl esters of acrylic acid or methacrylic acid include, for example, aliphatic alkyl esters containing from 1 to 30, and such as 4 to 18 carbon atoms in the alkyl group. Non-limiting examples include, for example, methyl methacrylate, ethyl methacrylate, butyl methacrylate, ethyl acrylate, butyl acrylate, and 2-ethyl hexyl acrylate. Suitable other copolymerizable ethylenically unsaturated monomers include, for example, vinyl aromatic compounds such as styrene and vinyl toluene; nitriles such as acrylonitrile and 4-methacrylonitrile; vinyl and vinylidene halides such as vinyl chloride and vinylidene fluoride and vinyl esters such as vinyl acetate.

The acrylic copolymers can include hydroxyl-functional groups, which are often incorporated into the polymer by including one or more hydroxyl-functional monomers in the reactants used to produce the copolymer. Useful hydroxyl-functional monomers include hydroxyalkyl acrylates and methacrylates, typically having 2 to 4 carbon atoms in the hydroxyalkyl group, such as hydroxyethyl acrylate, hydroxypropyl acrylate, 4-hydroxybutyl acrylate, hydroxy-functional adducts of caprolactone and hydroxyalkyl acrylates, and corresponding methacrylates, as well as the beta-hydroxy ester-functional monomers described below. The acrylic polymer can also be prepared with N-(alkoxymethyl) acrylamides and N-(alkoxymethyl) methacrylamides.

Beta-hydroxy ester-functional monomers can be prepared from ethylenically unsaturated, epoxy-functional monomers and carboxylic acids having from 5 to 20 carbon atoms, or from ethylenically unsaturated acid-functional monomers and epoxy compounds containing at least 5 carbon atoms that are not polymerizable with the ethylenically unsaturated acid functional monomer.

The polymer of the film forming resin used in the present invention can also include a polyurethane. Among the polyurethanes that can be used are polymeric polyols that are prepared by reacting polyester polyols or acrylic polyols such as those mentioned above with a polyisocyanate such that the OH/NCO equivalent ratio is greater than 1:1 so that free hydroxyl groups are present in the product.

According to the present invention, the film-forming component can include combinations of epoxy resins and acrylic resins or epoxy resins and polyurethane resins, as for example disclosed in US 5,108,832 or US 5,070,119.

If the film-forming component comprises an epoxy resin and a polyamine and/ or a polythiol-functional compound as a curing agent, as will be discussed below, the film-forming component may further comprise (i) a beta-hydroxy ester of (meth)acrylic acid; (ii) a (meth)acrylate-functional compound different from compound (i); or a combination thereof.

The beta-hydroxy ester of (meth)acrylic acid may comprise a plurality of beta-hydroxy ester of (meth)acrylic ester groups resulting from the reaction of a polyepoxide with (meth)acrylic acid. The polyepoxide can be reacted with the (meth)acrylic acid in an epoxy-carboxylic acid equivalent ratio of 1:0.1 to 1:1.2, suitably 1:0.5 to 1:1.2 more suitably 1:1 to 1:1.05. A particularly suitable beta-hydroxy ester of (meth)acrylic acid is the reaction product of EPIKOTE 828 (reaction product of bisphenol A with epichlorohydrin) with acrylic acid, commercially available from Allnex as EBECRYL 3720).

The polyepoxides that can be used for the reaction product of polyepoxide with (meth)acrylic acid can be those polyepoxides as disclosed above.

In addition, or alternatively to the beta-hydroxy ester of (meth)acrylic acid (i), a (meth)acrylate-functional compound (ii) different from compound (i) may be present in the film-forming component. The viscosity of the intumescent composition of the present invention can be adjusted thereby. Thus, it is believed that the optional component (ii) functions as a reactive diluent in the intumescent compositions of the present invention. The optional (meth)acrylate-functional component (ii) of the intumescent compositions of the present invention may include, for example, poly(meth)acrylates of 1,4-butanediol, neopentyl glycol, ethylene glycol, 1,2-propanediol, 1,3-propanediol, 2,2,4-trimethyl-1,3-pentanediol, 1,6-hexanediol, 1,4-cyclohexane dimethanol, para-xylene glycol, 1,4-cyclohexane diol, trimethylolethane, trimethylolpropane, pentaerythritol, polyether glycols, for example, poly(oxytetramethylene) glycol, poly(oxyethylene) glycol, poly(oxypropylene) glycol and combinations thereof.

As noted above, the film-forming component may also comprise a crosslinker. Any suitable crosslinker can be used according to the present invention, and will be chosen by one skilled in the art to react with the functional groups of the film-forming resin. Suitable crosslinkers include, for example, polyamines, for example polyetheramines, polyamides, polyepoxides, aminoplast resins, phenolic resins, polyisocyanates, polythiols, and polyols, etc.

The curing agent may also be a latent or blocked curing agent, wherein the actual functional group that is reactive with the functional groups of the film-forming resin is generated or restored in a deblocking reaction at curing conditions such as elevated temperatures. Suitable curing agents of said type are, for example, blocked polyisocyanates. Thus, the term poyisocyanate as used herein encompasses blocked and free polyisocyanates. Latent or blocked curing agents are particularly suitable to provide single component compositions to secure sufficient storage stability and pot life prior to application and curing.

The polyamine curing agent can include, for example, aliphatic polyamines, aromatic polyamines, polyamine amides, polyetheramines, for example those commercially available from Huntsman Cooperation, The Woodlands, Texas, polysiloxane amines, polysulfide amines or combinations thereof. Examples include diethylene triamine, 3,3-amino-bis-propylamine, triethylene tetraamine, tetraethylene pentamine, m-xylylenediamine, isophorone diamine, 1,3-bis(aminoethyl)cyclohexane, bis(4-aminocyclohexyl)methane, N-aminoethyl piperazine, 4,4'-diaminodiphenyl methane, 4,4'-diamino-3,3'-diethyl diphenyl methane and diamino diphenylsulphone and the reaction product of a polyamine and an aliphatic fatty acid such as the series of materials sold by BASF under the trademark VERSAMID can be used, the latter being particularly suitable.

In addition, adducts of any above polyamines can also be used. The adduct of polyamine is formed by reacting polyamine with a suitable reactive compound, such as an epoxy resin. This reaction will decrease the content of free amine in the curing agent, making it more useful at low temperature and/or high humidity environment.

As a curing agent, various polyetheramines, such as various Jeffamines available from Huntsman Corp., including, but not limited to, Jeffamine D-230, Jeffamine D-400, Jeffamine 600, Jeffamine 1000, Jeffamine 2005 and Jeffamine 2070, etc, can also be used.

As a curing agent, various polyamides can also be used. Generally, polyamides contain reaction products of dimer fatty acid and polyethyleneamine, and small amounts of monomer fatty acid. Dimer fatty acid is prepared by the oligomerization of monomer fatty acid. Polyethyleneamine can be any higher polyethyleneamine, such as diethylenetriamine, triethylenetetraamine, tetraethylenepentaamine, etc., wherein the most commonly used is diethylenetriamine. When polyamides are used as the curing agent, it may impart one or more desirable properties to the coating, such as corrosion resistance, water resistance and/or good flexibility.

The polythiol compounds useful as curing agents may include polysulfide thiols, polyether thiols, polyester thiols, pentaerythritol based thiols; or combinations thereof. A particularly suitable polythiol compound is Thioplast G4, commercially available from Akzo Nobel Functional Chemicals GmbH&Co KG, Greiz, Germany.

As mentioned above, if the film-forming resin comprises an epoxy resin a polyamine, a polythiol compound or a combination thereof may be used as a crosslinker.

In the coating composition of the present invention, the equivalent ratio of the combined functional groups in the film-forming resin, such as epoxy groups if an epoxy resin is used, to the functional groups in the curing agent may be from 2:1 to 1:2, such as from 1.05: 1.0 to 1:2, or from 1:1.4 to 1:2.

The coating composition may comprise the film-forming component in any suitable amount. For example, the coating composition may contain 20 wt% or greater of the film-forming component, such as 30 wt% or greater or 40 wt % or greater. The coating composition may for example contain 60 wt% or less of the film-forming component, such as 50 wt% or less or 40 wt% or less. The coating composition can for example comprise the film-forming component in an amount in a range between any of the above-mentioned values such as from 20 wt% to 60 wt%, from 20 wt% to 40 wt% or from 30 wt% to 50 wt.%. Wt% as reported herein is based on total solid weight of the composition unless indicated otherwise.

The coating compositions of the present invention further comprise a phosphate source. Phosphate source as used herein means any phosphorus-containing material that comprises phosphoric acid or condensation or dehydration products (including oxides) thereof, or salts, esters, amides or other derivatives of any of the foregoing. The phosphate source can comprise a variety of materials, such as, for example, phosphoric acid, mono- and diammonium phosphate, triphenyl phosphate, tris-(2-chloroethyl)phosphate, tri(2-chloroisopropyl)phosphate, phosphorus-containing amides such as phosphorylamide, and melamine pyrophosphate. Suitably, the source of phosphorous is an ammonium polyphosphate represented by the formula (NH₄)ₙ₊₂ Pₙ O₃ₙ₊₁, wherein n is an integer of at least 2, suitably n is an integer of at least 50. The intumescent composition of the present invention contains the phosphate source in an amount of 25 wt.% or greater, such as 30 wt.% or greater, 35 wt.% or greater, or 40 wt.% or greater. The coating composition comprises the phosphate source in an amount of 55 wt.% or less, such as 50 wt.% or less, or 45 wt.% or less, or 40 wt.% or less, or 35 wt.% or less. The coating composition may comprise the phosphate source in an amount in a range between any of the above-mentioned values such as from 25 to 55 wt.%, for example from 25 to 40 wt%, or from 40 to 55 wt %. The wt% reported herein are each based on the total solid weight of the composition. The phosphorous is believed to function as a char promoter in the intumescent composition.

The coating compositions of the present invention further comprise at least one of a borate source, an aluminum source, and/or a silica source. The coating compositions of the present invention can thus for example contain one of a borate source, an aluminum source or a silica source. For example, the coating composition can comprise a borate source as component c. Alternatively, the coating composition can comprise an aluminium source or a silica source as component c. On the other hand, the coating compositions can also comprise a combination of two or more of a borate source, an aluminum source, and/or a silica source. For example, the coating composition according to the present invention can comprise an aluminum source and a silica source. Borate source as used herein means any boron-containing material which contains boric acid, or condensation or dehydration products (including oxides) thereof, or salts or esters of any of the foregoing. Suitable borate sources include, for example, ammonium pentaborate, boric acid, metal borates such as zinc borate, boron oxide, borates such as sodium borate, potassium borate and ammonium borate, borate esters such as butyl borates or phenyl borates and combinations thereof. Aluminum source as used herein means any aluminum-containing material. Typically, the aluminum source may be an aluminum compound, in particular an inorganic aluminum compound. Suitable aluminum sources include, for example, aluminum hydroxide, aluminum oxide (alumina), aluminum chloride, aluminum salts and combinations thereof. For instance, the aluminum source can comprise aluminum hydroxide and/or aluminum oxide. Silica source as used herein means any material silicon-containing material which contains polysiloxane, silane, silicic acid, condensation or dehydration products (including oxides) thereof or salts or esters of any of the foregoing. Suitable silica sources include, for example, fumed silica or quartz, such as those having a particle size below 150 µm, or a substance that contains silica such as bentone or kaolin.

The intumescent composition of the present invention contains the borate source, if used, in an amount of 5 wt.% or greater, such as 6 wt.% or greater, such as 7 wt.% or greater, such as 8 wt.% or greater, such as 9 wt.% or greater, such as 10 wt.% or greater. The coating composition comprises the borate source in an amount of 20 wt.-% or less, such as 19 wt.% or less, or 18 wt.% or less, or 15 wt% or less. The coating composition may comprise the borate source in an amount in a range between any of the above-mentioned values such as from 5 wt.% to 20 wt.%, or from 6 wt.% to 15 wt.%, or from 9 wt.% to 15 wt.%. The intumescent composition of the present invention contains the aluminum source, if used, in an amount of 0.1 wt.% or greater, such as 0.2 wt.% or greater, or 0.3 wt.% or greater, or 0.5 wt.% or greater, or 1 wt.% or greater, or 3 wt.% or greater, or 5 wt.% or greater. The coating composition comprises the aluminum source, if used, in an amount of 10 wt.% or less, such as 9 wt.% or less, or 8 wt.% or less, or 5 wt.% or less, or 3 wt.% or less, or 1 wt.% or less, or 0.7 wt.% or less. The composition may comprise the aluminum source in an amount in a range between any of the above-mentioned values such as from 0.1 to 10 wt %, such as 0.2 to 8 wt % or from 0.3 wt.% to 1 wt.%.The intumescent composition of the present invention contains the silica source, if used, in an amount of 0.1 wt.% or greater, such as 0.2 wt.% or greater, or 0.3 wt.% or greater, or 0.4 wt.% or greater, or 0.5 wt.% or greater. The coating composition comprises the silica source, if used, in an amount of 2 wt.% or less, or 1 wt.% or less, or 0.8 wt.% or less. The composition may comprise the silica source in an amount in a range between any of the above-mentioned values such as from 0.1 to 2 wt %, such 0.4 to 1 wt %. The wt % reported above are each based on the total solid weight of the composition.

The compositions of the present invention further comprise titanium dioxide (TiO₂). The compositions according to the present invention comprise the TiO₂ in an amount of 5 wt.% or greater, such as 6 wt.% or greater, or 7 wt.% or greater, or 8 wt.% or greater, or 9 wt.% or greater, or 10 wt.% or greater. The coating composition comprise the TiO₂ in an amount of 20 wt.% or less, such as 19 wt.% or less, or 18 wt.% or less, or 17 wt.% or less, or 15 wt.% or less, or 13 wt.% or less, or 10 wt.% or less. The composition may comprise the TiO₂ in an amount in a range between any of the above-mentioned values such as from 5 to 20 wt.%, such as 5 to 10 wt%, or from 10 wt.% to 18 wt.%. The wt% reported above are each based on the total solid weight of the composition.

As noted above, the present inventors have discovered that use of a borate source, aluminum source and/or silica source in conjunction with TiO₂ and a phosphate source, in the ranges given above, gives an intumescent coating having desirable char formation in conjunction with desirable adhesion to the substrate. Thus, the present composition provides advantages over similar compositions in which one or more of the recited elements are missing and/or are used outside the recited ranges.

The present coating compositions further comprise a gas source. A "gas source" refers to a compound providing an expansion gas upon thermal decomposition. The expansion gas serves to cause the intumescent composition to foam and swell when exposed to high temperature or flames. As a result of this expansion, the char that is formed is a thick, multicelled material that serves to insulate and protect the underlying substrate. Any suitable source of expansion gas may be used in the intumescent composition of the present invention, such as a nitrogen-containing material. Examples of suitable nitrogen-containing materials include melamine, salts of phosphoric acid, guanidine, methylolated melamine, hexamethoxymethyl melamine, urea, dimethylurea, melamine pyrophosphate, dicyandiamide, guanylurea phosphate and glycine. Other conventional sources of expansion gas can also be used such as those materials that liberate carbon dioxide. Examples are alkaline earth metals such as calcium carbonate or magnesium carbonate. Compounds that release water vapor as they decompose upon heating, for example calcium hydroxide, magnesium dihydroxide or aluminum trihydroxide, may also be used, as can expandable graphite. Other examples of such compounds are also borate sources, such as boric acid and boric acid derivatives such as boric acid esters and metal borates. The gas source, such as melamine, may be used in the intumescent compositions of the present invention in an amount of 1 wt.% or greater, such as 2 wt.% or greater, or 3 wt.% or greater. The compositions according to the present invention can comprise the gas source for example in an amount of 10 wt.% or less, or 8 wt.% or less, or 7 wt.% or less, or 5 wt.% or less. The composition may comprise the gas source in an amount in a range between any of the above-mentioned values such as from 1to 10 wt.-, such as 3 to 7 wt.%. The wt% reported are each based on the total solid weight of the composition.

The coatings of the present invention may contain one or more additional additives suitable for use in intumescent coatings. Examples of such additives include a zinc source, an acid source, a metal oxide, for example pre-hydrolysed tetraethylorthosilicate, titanium isopropoxide, a carbon source, inorganic fillers, glass fibers and/or mineral fibers, for example CHOPVANTAGE from PPG, Coatforce or Roxul fibers from Lapinus, rheology additives, organic solvents, pigments, foam stabilizers, and combinations thereof.

The optional source of zinc can comprise a variety of materials. It is believed that the zinc material may contribute to the formation of a small-celled structure in the char. The small cells of the char may afford better insulation of the substrate and are better able to retain the char's integrity and adhere to the substrate. Thus, cracking of the char and its breaking away from the substrate are minimized and a greater measure of protection is afforded to the underlying substrate. Examples of suitable materials that are sources of zinc include zinc oxide, zinc salts, such as zinc borate and zinc phosphate, zinc carbonate; also zinc metal can be used.

The acid source may be selected from ammonium phosphate, ammonium polyphosphate, diammonium diphosphate, diammonium pentaborate, phosphoric acid-generating materials, boric acid, metal or organic borates and combinations thereof.

It should be understood that many of the components of the present composition may serve more than one function in the composition. For example, the phosphorus, zinc, boron and expansion gas can each be provided by a separate source material or, alternatively, a single material may be a source of more than one of these components. For example, melamine pyrophosphate can provide a source of both phosphorus and expansion gas, zinc borate can provide a source of zinc and a source of borate; zinc phosphate may provide a source of zinc and a source of phosphate, and the like.

The optional reinforcing fillers may be chosen from among a large array of conventionally utilized materials, including fibrous reinforcements and platelet reinforcements, which may be suitable over other fillers. Examples of fibrous reinforcements include glass fibers, ceramic fibers, e.g., aluminum oxide/silicon oxide, graphite fibers, mineral fibers and basalt fibers. Platelet reinforcements include hammer-mill glass flakes, mica, and wollastonite. Other suitable fillers include metal oxides, clay, talc, silica, diatomaceous earth, LAPINUS fibers and various pigments. The reinforcing filler is believed to assist in controlling expansion of the fire-protective composition prior to and during char formation so that the resultant char is hard and uniform. When present, the reinforcing filler, such as glass fibers and/or mineral fibers, is usually present in the composition in an amount of 5.0 wt.-% or less, such as 4 wt.% or less, such as 3 wt% or less, based on the total solid weight of the intumescent composition. The composition according to the present invention can for example comprise the reinforcing filler in an amount of 0.1 wt.% or greater, such as 0.2 wt.% or greater, 0.5 wt.% or greater, or 1 wt.% or greater. The composition may comprise the reinforcing filler in an amount in a range between any of the above-mentioned values such as from 0.1 wt.% to 5.0 wt.% or from 1 wt.% to 4 wt.%. The wt% reported are each based on the total solid weight of the composition.

The intumescent compositions of the present invention may also contain a variety of conventional additives, such as rheology additives, organic solvents, foam stabilizers, pigments, flame spread control agents, and the like. These ingredients are optional and can be added in varying amounts. Typically, if additional additives are used they are present in a total amount of 1 wt.% or greater, such as 2 wt.% or greater, or 5 wt.% or greater, or 10 wt.% or greater. The additional additives, if used, can for example be present in the compositions according to the present invention in an amount of 20 wt.% or less, such as 15 wt.% or less, or 12 wt.% or less. The composition may comprise the optional additional additives in an amount in a range between any of the above-mentioned values such as from 1 to 20 wt%, such as 2 to 20 wt% or 5-15 wt%. The wt% reported are each based on total solid weight of the composition.

The intumescent composition may be either one component ("1K"), or multi-component compositions such as two component ("2K") or more. A 1K composition will be understood as referring to a composition wherein all the coating components are maintained in the same container after manufacture, during storage, etc. A 1K composition can be applied to a substrate and cured by any conventional means, such as by heating, forced air, and the like. The present compositions can also be multi-component, which will be understood as compositions in which various components are maintained separately until just prior to application. The present compositions can be thermoplastic or thermosetting. For example, the present compositions might be packaged as a 2K system, with the film-forming resin in a first package (A) and a curing agent therefor in a second package (B), whereby all of the other components used in the coating composition are used in any combination in either package (A) or package (B) or in both, or some or all may be in one or more further packages (C). The individual packages are mixed prior to use of the intumescent composition.

The curable intumescent composition of the present invention may be in the form of a thick material such as a mastic. It is particularly suitable that the composition be solvent-free and spray-applied. If desired, thinning can be accomplished with a variety of conventional solvents such as, xylene, methylene chloride or 1,1,1-trichloroethane.

The curable intumescent coating composition of the present invention may be applied to provide the various dry film thicknesses as desired. Suitable dry film thicknesses can range from 10 -20,000 microns, such as 50 - 5000 microns, such as 100 - 2000 microns. The desired dry film thickness ("DFT") can vary depending on the application. For use on building structural components a DFT ranging from 200 to 20,000 microns, such as 300 to 1000 microns or 3000 to 15000 microns may be suitable. For use on lithium batteries, a DFT ranging from 200 to 5000 microns, such as 200 to 1000 or 1000 to 5000 may be suitable.

Alternatively, the intumescent composition of the present invention can be formed into a self-supported film or sheet. The self-supported film or sheet may subsequently be cured to form a crosslinked intumescent self-supported film or sheet. In general, the curable intumescent composition of the present invention can be formed into a film or sheet by any technique well known to a person skilled in the art, for example a cast molding process, by impregnating a mesh with the coating, and the like. The film or sheet can be cured to form a crosslinked intumescent self-supported film or sheet prior to the application of the crosslinked intumescent self-supported film or sheet to a substrate. It is also within the ambit of the present invention that after the forming step the uncured film or sheet is applied to a substrate and then subsequently cured to obtain the crosslinked intumescent layer according to the present invention. The film or sheet may be applied to the substrate through an adhesive.

The present compositions and self-supporting sheets or films can be applied to any substrates known in the art, for example, automotive substrates, marine substrates, industrial substrates, heavy-duty equipment, packaging substrates, lumber, wood flooring and furniture, apparel, electronics including housings and circuit boards and including consumer electronics such as housings for computers, notebooks, smartphones, tablets, televisions, gaming equipment, computer equipment, computer accessories, MP3 players, and the like, glass and transparencies, sports equipment including golf balls, and the like. These substrates can be, for example, metallic or non-metallic. Metallic substrates include tin, steel, tin-plated steel, chromium passivated steel, galvanized steel, aluminum, and aluminum foil. Metal sheet as used herein refers to flat metal sheet and coiled metal sheet, which is coiled, uncoiled for coating and then recoiled for shipment to a manufacturer. Non-metallic substrates include polymeric, plastic, polyester, polyolefin, polyamide, cellulosic, polystyrene, polyacrylic, poly(ethylene naphthalate), polypropylene, polyethylene, nylon, EVOH, polylactic acid, other "green" polymeric substrates, poly(ethyleneterephthalate) ("PET"), polycarbonate, polycarbonate acrylobutadiene styrene ("PC/ABS"), SMC, carbon fiber, polyamide, wood, veneer, wood composite, particle board, medium density fiberboard, cement, stone, glass, paper, cardboard, textiles, leather both synthetic and natural, and the like. The substrate can be part of a structure or part of a vehicle. "Structure" as used herein refers to a any part of a building, bridge, transportation infrastructure, oil rig, oil platform, water tower, power line tower, support structures, wind turbines, walls, piers, docks, levees, dams, shipping containers, trailers, and any metal structure that is exposed to a corrosive environment. "Vehicle" as used herein refers to in its broadest sense all types of vehicles, such as but not limited to cars, trucks, buses, tractors, harvesters, heavy duty equipment, vans, golf carts, motorcycles, bicycles, railcars, subway cars, airplanes, helicopters, boats of all sizes and the like.

The substrate can be one that has been already treated in some manner, such as to impart visual and/or color effect. For instance, the substrate can be alkaline cleaned, deoxidized, mechanically cleaned, ultrasonically cleaned, solvent wiped, roughened, plasma cleaned or etched, exposed to chemical vapor deposition, treated with an adhesion promoter, plated, anodized, annealed, cladded, or any combination thereof prior to application of the coating composition. The substrate can be treated using any of the previously described methods prior to application of the coating composition such as by dipping the substrate in a cleaner and/or deoxidizer bath prior to applying the coating composition. The substrate can also be plated prior to applying the coating composition. As used herein, "plating" refers to depositing a metal over a surface of the substrate. The substrate may be also be 3D printed.

As discussed above, the substrate may comprise a battery or battery component. The battery may be, for example, an electric vehicle battery, and the battery component may be an electric vehicle battery component. A "battery component" may be any component found in a battery, such as a lithium ion battery. The battery component may comprise, for example, an electrode, a battery cell, a battery shell, a battery module, a battery pack, a battery box, a battery cell casing, a pack shell, a battery lid and tray, a thermal management system, a battery housing, a module housing, a module racking, a battery side plate, a battery cell enclosure, a cooling module, a cooling tube, a cooling fin, a cooling plate, a bus bar, a battery frame, an electrical connection, metal wires, or copper or aluminum conductors or cables.

Accordingly, the present invention is further directed to an article coated at least in part with a coating composition of the present invention. The coating composition of the present invention can be applied to an article in any form, such as a coating composition or a crosslinked intumescent self-supported film or sheet. "Applied to" and any variants thereof when referring to the film or sheet means that the film/sheet can be affixed to an article, such as by means of an adhesive layer, or positioned within or placed within an article, such as adjacent to a fixed or movable member of the article. The article can be a structure. The article can be a vehicle. The article can be a battery component or a battery, such as a lithium ion battery. For example, the coating composition of the present invention or the crosslinked self-supported film or sheet can be applied to any structural element of a battery, in particular lithium ion battery, to obtain a battery according to the present invention. The battery may comprise exterior wall elements defining a housing and optionally interior wall elements, wherein the crosslinked intumescent coating or the crosslinked intumescent self-supported film or sheet is at least partially applied to the external and/or internal side of any of the exterior wall elements and/or to any side of any of the interior wall elements, if present. The exterior wall and/or interior wall elements may comprise composite, steel, aluminum and/or polycarbonate for example. The present coating compositions may be particularly suitable for use on a battery as it forms a strong char with relatively small expansion, making it suitable for the limited gap space between battery modules and the case.

The battery, in particular lithium ion battery, may be a battery pack comprising a plurality of individual battery cells, wherein the present coating or the crosslinked intumescent self-supported film or sheet is positioned to thermally insulate at least some of the individual battery cells from each other in the expanded and optionally charred state, such as in between two battery cells. In addition, the curable intumescent coating composition or the crosslinked intumescent self-supported film or sheet may be applied to or placed adjacent to the housing walls and interior dividing walls of the battery pack as discussed above.

It might be desirable to use one or more addition fire retardant materials and/or fire mitigation means within and/or around the battery. For example, a thermally insulating material or a high strength material, or the like could be wrapped around or otherwise positioned between battery cells, or around the perimeter or interior of the battery housing. Examples of such material include fiberglass, mineral wool, silica/silica fibers, alumina, Kevlar, Nomex, calcium-silicate, or calcium silicate fibers; these materials can be, for example, in a sheet or other self supported form. Foams could also be used, such as polyurethane/polyurea foam with flame retardants. Physical barriers could also be employed, such as cooling fins interposed between battery cells, mica boards, Aerogel blankets, and/or mineral/glass/carbon fiber-containing blankets.

**In** order to provide fire protection for articles comprising a battery and their users it is also within the ambit of the present invention to apply the curable intumescent coating composition or the crosslinked intumescent self-supported film or sheet to a part of an article adjacent to the battery between the battery and the article to insulate the article from the battery. In such cases a conventional battery or a battery according to the present invention can be employed. The article may be, for example, a mobile phone, a tablet or a laptop computer.

Alternatively, the article may be a vehicle such as a hybrid or electric car, bus or truck. In such vehicles it is common to position the battery, especially the lithium ion battery, due to its weight as a flat battery pack underneath the floor portion of the vehicle body, for example the car body. In such cases, the coatings of the present invention or the crosslinked intumescent self-supported film or sheet may be applied to the floor portion of the vehicle adjacent to the battery between battery and the vehicle body. Thereby, in an event of a thermal runaway of the battery or a battery fire, the car body, especially the passenger cabin, is protected by the coating layer/film of the present invention so that the fire will not spread into the passenger cabin and the heat-up of the passenger cabin will be limited for a prolonged period of time so that the passengers will have sufficient time to safely escape from the vehicle in case of such an incident.

The compositions of the present invention can be applied by any means standard in the art, such as electrocoating, spraying, electrostatic spraying, dipping rolling, brushing, and the like, including application robotically.

As used herein, unless otherwise expressly specified, all numbers such as those expressing values, ranges, amounts or percentages may be read as if prefaced by the word "about", even if the term does not expressly appear. Also, any numerical range recited herein is intended to include all sub-ranges subsumed therein. Singular encompasses plural and vice versa. For example, although reference is made herein to "a" film-forming component, "a" film-forming resin, "a" phosphate source, "a" borate source, "a" silica source, "an" aluminum source, "a" gas source, and the like, one or more of each of these and any other components can be used. Also, as used herein, the term "polymer" is meant to refer to prepolymers, oligomers and both homopolymers and copolymers; the prefix "poly" refers to two or more. When ranges are given, any endpoints of those ranges and/or numbers within those ranges can be combined with the scope of the present invention. "Including", "such as", "for example" and like terms means "including/such as/for example but not limited to". The terms "acrylic" and "acrylate" are used interchangeably (unless to do so would alter the intended meaning) and include acrylic acids, anhydrides, and derivatives thereof, lower alkyl-substituted acrylic acids, e.g., C₁-C₂ substituted acrylic acids, such as methacrylic acid, ethacrylic acid, etc., and their C₁-C₆ alkyl esters and hydroxyalkyl esters, unless clearly indicated otherwise.

In view of the foregoing the present disclosure relates inter alia, without being limited thereto, to the following aspects:

In a first aspect, a coating composition is disclosed, the coating composition comprising:
a) a film-forming component, wherein the film-forming component comprises an epoxy resin and optionally a crosslinker therefor;
b) a phosphate source;
c) at least one of a borate source, an aluminum source and/or a silica source;
d) TiO₂; and
e) a gas source;
wherein the TiO₂ is present in an amount of 5 to 20 wt %, the phosphate source is present in an amount of 25 to 55 wt %, and wherein if component c comprises a borate source, it is present in an amount of 5 to 20 wt %, if component c comprises an aluminum source, it is present in an amount of 0.1 to 10 wt %, and if component c comprises a silica source, it is present in an amount of 0.1 to 2 wt %, with wt % based on the total solid weight of the composition.

A second aspect relates to the coating composition according to the preceding first aspect, wherein the TiO₂ is present in an amount of 9 to 15 wt %, based on the total solid weight of the composition.

A third aspect relates to the coating composition according to any one the preceding first aspect or second aspect, wherein the phosphate source is present in an amount of 25 to 40 wt %.

A fourth aspect relates to the coating composition according to any one the preceding first aspect or second aspect, wherein the phosphate source is present in an amount of 40 to 55 wt %, based on the total solid weight of the composition.

A fifth aspect relates to the coating composition according to any one the preceding first to fourth aspects, wherein component c comprises a borate source, wherein the borate source is preferably present in an amount of 9 to 15 wt %, based on the total solid weight of the composition.

A sixth aspect relates to the coating composition according to any one the preceding first to fifth aspects, wherein component c comprises an aluminum source, wherein the aluminum source is preferably present in an amount of 0.2 to 8 wt %, based on the total solid weight of the composition.

A seventh aspect relates to the coating composition according to any one the preceding first to sixth aspects, wherein component c comprises a silica source, wherein the silica source is preferably present in an amount of 0.4 to 1 wt %, based on the total solid weight of the composition.

An eighth aspect relates to the coating composition according to any one the preceding first to seventh aspects, wherein the film-forming component is present in an amount of 20-60 wt %, based on the total solid weight of the composition.

A ninth aspect relates to the coating composition according to any one the preceding first to eighth aspects, wherein the gas source is present in an amount of 1-10 wt%, with wt% based on the total solid weight of the composition.

A tenth aspect relates to the coating composition according to any one the preceding first to ninth aspects, wherein the coating composition further comprises fibers, such as glass fibers and/or mineral fibers, in an amount of up to 4 wt%, based on the total solid weight of the composition.

An eleventh aspect relates to the coating composition according to any one the preceding first to tenth aspects, wherein the coating composition further comprises one or more additives in a total amount of 2-20 wt %, with wt% based on the total solid weight of the composition.

A twelfth aspect relates to the coating composition according to any one the preceding first to eleventh aspects, wherein the film-forming component comprises an epoxy resin and an amine crosslinker.

A thirteenth aspect relates to the coating composition according to any one the preceding first to twelfth aspects, wherein the phosphate source comprises an ammonium phosphate, triphenyl phosphate and/or tri(2-chloroisopropyl)phosphate, preferably comprising ammonium polyphosphate.

A fourteenth aspect relates to the coating composition according to any one the preceding first to thirteenth aspects, wherein the borate source, if used, comprises a metal borate ammonium pentaborate and/or boric acid.

A fifteenth aspect relates to the coating composition according to any one the preceding first to fourteenth aspects, wherein the aluminum source, if used, comprises aluminum hydroxide and/or aluminum oxide.

A sixteenth aspect relates to the coating composition according to any one the preceding first to fifteenth aspects, wherein the silica source, if used, comprises fumed silica.

A seventeenth aspect relates to the coating composition according to any one the preceding first to sixteenth aspects, wherein the gas source comprises melamine, urea, and/or expandable graphite.

An eighteenth aspect relates to a self-supported film or sheet formed from the coating composition according to any one the preceding first to seventeenth aspects.

In a nineteenth aspect furthermore a method for coating a substrate is disclosed, the method comprising applying to at least a portion of the substrate a coating composition according to any one of the preceding first to seventeenth aspects or a film or sheet according to the preceding eighteenth aspect.

A twentieth aspect relates to the method according to the preceding nineteenth aspect, wherein the substrate comprises metal, such as aluminum or steel, or plastic, such as polycarbonate.

In a twenty-first aspect a substrate coated according to the method of any one of the preceding nineteenth aspect or twentieth aspect is disclosed.

A twenty-second aspect relates moreover to an article comprising the substrate according to the preceding twenty-first aspect.

A twenty-third aspect relates to the article according to the preceding twenty-second aspect, wherein the article comprises a vehicle or a structure.

A twenty-fourth aspect relates to the article according to the preceding twenty-second aspect, wherein the article comprises a lithium ion battery.

A twenty-fifth aspect relates to the article according to the preceding twenty-fourth aspect, wherein the battery comprises exterior wall elements defining a housing and optionally interior wall elements, wherein the coating composition or film or sheet is at least partially applied to the external and/or internal side of any of the exterior wall elements and/or to any side of any of the interior wall elements, if present.

A twenty-sixth aspect relates to the article according to the preceding twenty-fifth aspect, wherein any of the exterior wall and/or interior wall elements comprises composite, steel, aluminum and/or polycarbonate.

A twenty-seventh aspect relates to the article according to any one of the preceding twenty-fourth aspect to twenty-sixth aspect, wherein the battery is a battery pack comprising a plurality of individual battery cells, wherein the coating composition or film or sheet is positioned to thermally insulate at least two of the individual battery cells from each other in the expanded and optionally charred state; and wherein the battery optionally comprises one or more additional fire retardant materials and/or fire mitigation means.

In a twenty-eighth aspect a battery component is disclosed, wherein the battery component is coated at least in part with the coating composition according to any one of the preceding first to seventeenth aspects or to which has been applied a film or sheet according to the preceding eighteenth aspect.

A twenty-ninth aspect relates to the battery component according to the preceding twenty-eighth aspect, wherein the battery component comprises an electric vehicle battery component.

A further aspect relates to the battery component according to any one of the preceding twenty-eighth aspect or twenty-ninth aspect, wherein the battery component comprises a battery cell, a battery shell, a battery module a battery pack, a battery box, a battery cell casing, a pack shell, a battery lid and tray, a thermal management system, a battery housing, a module housing, a module racking, a battery side plate, a battery cell enclosure, a cooling module, a cooling tube, a cooling fin, a cooling plate, a bus bar, a battery frame, an electrical connection, metal wires, copper or aluminum conductors or cables, or any combination thereof.

### EXAMPLES

The following examples are intended to illustrate the invention and should not be construed as limiting the invention in any way.

### Examples

Multiple coating formulations (Formulations 1-13) were prepared using the ingredients shown below. The base for each coating formulation was prepared by dispersing all the components under a dispersion machine at high rotation speed until the sizes of the particles in the formulation were below 100 microns. The hardener for each coating formulation was prepared by dispersing all the components under a dispersion machine at high rotation speed until the sizes of the particles in the formulation were below 100 microns. The dispersion speed and disperser plate size were 2000 rpm and 80 mm, respectively, with the container diameter of 180 mm. Immediately prior to application, the base and hardener were mixed in the relative amounts shown in the tables below. The base and hardener were mixed by a mixer or spatula, until the color of the mixture became homogenous and lump-free. The coating formulations were each applied on 150 x 75 x 1.2 mm aluminum panels with airless spray application, and the thus formed coatings were tested against 1200±50 °C torch fire, with 2 bar gas pressure and burner diameter of 30 mm, for 10 minutes. The temperature at the backside of the aluminum panel was monitored. The expansion coefficient of the coatings, which is defined as the ratio between the thickness of expanded coating and the virgin coating, the formed char and its adhesion to the substrate were assessed. The results are summarized in Table 1 below.

### Formulation 1: (APP: Borate: TiO₂ = 15.2 : 31.2: 0) - Comparative Example

### Formulation 1-base (base: hardener = 4:1)

| Component | Trade name | Weight% in set |
|---|---|---|
| Bis-phenol F diglycidyl ether | EPIKOTE 862¹ | 21.1 |
| Cashew nutshell liquid | ROYOXY RAD-913 | 3.2 |
| Glass fiber | CHOPVANTAGE 3156³ | 4.1 |
| Castor oil derivative | THIXATROL ST⁴ | 0.2 |
| Ammonium polyphosphate | EXOLIT AP 422⁵ | 15.2 |
| Zinc borate | C-TEC CT-ZB 400⁶ | 31.2 |

| | | |
|---|---|---|
| ¹ Hexion ² Gabriel performance products ³ Nippon electric glass ⁴ Elementis Specialties ⁵ Clariant AG ⁶ R J Marshall Co | | |

### Formulation 1- hardener (base: hardener = 4:1)

| Component | Trade name | Weight% in set |
|---|---|---|
| (tris-2,4,6-dimethylaminomethyl phenol) | Accelerator 960-1⁷ | 1.7 |
| Polyamide amine | Aradur 140⁸ | 18.7 |
| Castor oil derivative | THIXATROL ST | 0.1 |
| Attapulgite | ATTAGEL 50⁹ | 1.9 |
| Melamine | Recrystallized melamine¹⁰ | 2.6 |

| | | |
|---|---|---|
| ⁷ Huntsman ⁸ Huntsman ⁹ BASF ¹⁰ Allnex | | |

### Formulation 2: (APP: Borate: TiO₂ = 15.2 : 29.4: 2.7) - Comparative Example

### Formulation 2-base (base: hardener = 3:1)

| Component | Trade name | Weight% in set |
|---|---|---|
| Bis-phenol F diglycidyl ether | EPIKOTE 862 | 21.1 |
| Cashew nutshell liquid | ROYOXY RAD-913 | 3.2 |
| Glass fiber | CHOPVANTAGE 3156 | 3.2 |
| Castor oil derivative | THIXATROL ST | 0.2 |
| Ammonium polyphosphate | EXOLIT AP 422 | 15.2 |
| Zinc borate | C-TEC CT ZB 400 | 29.4 |
| Titanium dioxide | TI-PURE R-706¹¹ | 2.7 |

| | | |
|---|---|---|
| ¹¹ The Chemours Company LLC | | |

### Formulation 2- hardener (base: hardener = 3:1)

| Component | Trade name | Weight% in set |
|---|---|---|
| (tris-2,4,6-dimethylaminomethyl phenol) | Accelerator 960-1 | 1.7 |
| Polyamide amine | Aradur 140 | 18.7 |
| Castor oil derivative | THIXATROL ST | 0.1 |
| Attapulgite | ATTAGEL 50 | 1.9 |
| Melamine | Recrystallized melamine | 2.6 |

### Formulation 3: (APP: Borate: TiO₂ = 15.2 : 27.5: 4.6) - Comparative Example

### Formulation 3-base (base: hardener = 3:1)

| Component | Trade name | Weight% in set |
|---|---|---|
| Bis-phenol F diglycidyl ether | EPIKOTE 862 | 21.1 |
| Cashew nutshell liquid | ROYOXY RAD-913 | 3.2 |
| Glass fiber | CHOPVANTAGE 3156 | 3.1 |
| Castor oil derivative | THIXATROL ST | 0.2 |
| Ammonium polyphosphate | EXOLIT AP-422 | 15.2 |
| Zinc borate | C-TEC CT ZB 400 | 27.5 |
| Titanium dioxide | TI-PURE R-706 | 4.6 |

### Formulation 3- hardener (base: hardener = 3:1)

| Component | Trade name | Weight% in set |
|---|---|---|
| (tris-2,4,6-dimethylaminomethyl phenol) | Accelerator 960-1 | 1.7 |
| Polyamide amine | Aradur 140 | 18.7 |
| Castor oil derivative | THIXATROL ST | 0.1 |
| Attapulgite | ATTAGEL 50 | 1.9 |
| Melamine | Recrystallized melamine | 2.5 |

### Formulation 4: (APP: Borate: TiO₂ = 15.7: 18.5: 5.9) - Comparative Example

### Formulation 4-base (base: hardener = 7:3)

| Component | Trade name | Weight% in set |
|---|---|---|
| Bis-phenol F diglycidyl ether | EPIKOTE 862 | 25.2 |
| Cashew nutshell liquid | ROYOXY RAD-913 | 3.5 |
| glass fiber | CHOPVANTAGE 3156 | 1.4 |
| Castor oil derivative | THIXATROL ST | 0.2 |
| Ammonium polyphosphate | EXOLIT AP 422 | 15.7 |
| Zinc borate | C-TEC CT ZB 400 | 18.5 |
| Titanium dioxide | TI-PURE R-706 | 5.9 |

### Formulation 4- hardener (base: hardener = 7:3)

| Component | Trade name | Weight% in set |
|---|---|---|
| (tris-2,4,6-dimethylaminomethyl phenol) | Accelerator 960-1 | 1.9 |
| Polyamide amine | Aradur 140 | 23.0 |
| Castor oil derivative | THIXATROL ST | 0.1 |
| Attapulgite | ATTAGEL 50 | 1.9 |
| Melamine | Recrystalllized melamine | 2.7 |

### Formulation 5: (APP: Borate: TiO₂ = 29.3 : 19.6: 5.9)

### Formulation 5-base (base: hardener = 4:1)

| Component | Trade name | Weight% in set |
|---|---|---|
| Bis-phenol F diglycidyl ether | EPIKOTE 862 | 18.5 |
| Cashew nutshell liquid | ROYOXY RAD-913 | 3.2 |
| glass fiber | CHOPVANTAGE 3156 | 1.4 |
| Castor oil derivative | THIXATROL ST | 0.2 |
| Ammonium polyphosphate | EXOLIT AP 422- | 29.3 |
| Zinc borate | C-TEC CT ZB 400 | 19.6 |
| Titanium dioxide | TI-PURE R-706 | 5.9 |

### Formulation 5- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 16.3 |
| Castor oil derivative | THIXATROL ST | 0.1 |
| Attapulgite | ATTAGEL 50 | 1.9 |
| Melamine | Recrystallized melamine | 2.5 |

### Formulation 6: (APP: Borate: TiO₂ = 35.3 : 10.3: 9.2)

### Formulation 6-base (base: hardener = 4:1)

| Component | Trade name | Weight% in set |
|---|---|---|
| Bis-phenol F diglycidyl ether | EPIKOTE 862 | 18.6 |
| Cashew nutshell liquid | ROYOXY RAD-913 | 3.2 |
| glass fiber | CHOPVANTAGE 3156 | 1.4 |
| Castor oil derivative | THIXATROL ST | 0.2 |
| Ammonium polyphosphate | EXOLIT AP 422 | 35.3 |
| Zinc borate | C-TEC CT ZB 400 | 10.3 |
| Titanium dioxide | TI-PURE R-706 | 9.2 |

### Formulation 6- hardener (base: hardener = 4:1)

| Component | Trade name | Weight% in set |
|---|---|---|
| (tris-2,4,6-dimethylaminomethyl phenol) | Accelerator 960-1 | 1.0 |
| Polyamide amine | Aradur 140 | 18.2 |
| Castor oil derivative | THIXATROL ST | 0.1 |
| Melamine | Recrystallized melamine | 2.5 |

### Formulation 7: (APP: Borate: TiO₂ = 40.7: 14.5: 13.3)

### Formulation 7-base (base: hardener = 2:1)

| Component | Trade name | Weight% in set |
|---|---|---|
| Bis-phenol F diglycidyl ether | EPIKOTE 862 | 11.4 |
| Cashew nutshell liquid | ROYOXY RAD-913 | 3.2 |
| Glass fiber | CHOPVANTAGE 3156 | 1.4 |
| Castor oil derivative | THIXATROL ST | 0.2 |
| Ammonium polyphosphate | EXOLIT AP 422 | 20.7 |
| Zinc borate | C-TEC CT ZB 400 | 14.5 |
| Titanium dioxide | TI-PURE R-706 | 13.3 |

### Formulation 7- hardener (base: hardener = 2:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 10.2 |
| Ammonium polyphosphate | EXOLIT AP 422 | 20.0 |
| Castor oil derivative | THIXATROL ST | 0.1 |
| Melamine | Recrystallized melamine | 3.9 |

### Formulation 8: (APP: Borate: TiO₂ = 52.1: 0: 7.2) - Comparative Example

### Formulation 8-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Castor oil derivative | THIXATROL ST | 0.2 |
| Ammonium polyphosphate | EXOLIT AP 422 | 52.1 |
| Titanium dioxide | TI-PURE R-706 | 7.2 |

### Formulation 8- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

### Formulation 9: (APP: Al(OH)₃ : TiO₂ = 51.9: 0.2: 7.2)

### Formulation 9-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Aluminum hydroxide | ALUMINUM HYDROXIDE¹¹ | 0.2 |
| Castor oil derivative | THIXATROL ST | 0.2 |
| Ammonium polyphosphate | EXOLIT AP 422 | 51.9 |
| Titanium dioxide | TI-PURE R-706 | 7.2 |

| | | |
|---|---|---|
| ¹¹ Bisley & Company Pty Ltd | | |

### Formulation 9- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

### Formulation 10: (APP: Al(OH)₃ : TiO₂ = 42.6: 9.5: 7.2)

### Formulation 10-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Aluminum hydroxide | ALUMINUM HYDROXIDE | 9.5 |
| Castor oil derivative | THIXATROL ST | 0.2 |
| Ammonium polyphosphate | EXOLIT AP 422 | 42.6 |
| Titanium dioxide | TI-PURE R-706 | 7.2 |

### Formulation 10- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

### Formulation 11: (APP: Al₂O₃ : TiO₂ = 51.9: 0.2: 7.2)

### Formulation 11-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Aluminum oxide | CALCINED ALUMINA¹² | 0.2 |
| Castor oil derivative | THIXATROL ST | 0.2 |
| Ammonium polyphosphate | EXOLIT AP 422 | 51.9 |
| Titanium dioxide | TI-PURE R-706 | 7.2 |

| | | |
|---|---|---|
| ¹² Bisley & Company Pty Ltd | | |

### Formulation 11- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

### Formulation 12: (APP: SiO₂ : TiO₂ = 51.6: 0.5: 7.2)

### Formulation 12-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Silica | FUMED SILICA¹³ | 0.5 |
| Castor oil derivative | THIXATROL ST | 0.2 |
| Ammonium polyphosphate | EXOLIT AP 422 | 51.6 |
| Titanium dioxide | TI-PURE R-706 | 7.2 |

| | | |
|---|---|---|
| ¹³ Brenntag | | |

### Formulation 12- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

### Formulation 13: (APP: SiO₂: Al₂O₃: TiO₂ = 51.1: 0.5: 0.5: 7.2)

### Formulation 13-base (base: hardener = 4:1)

| Component | Trade name | Weight% in set |
|---|---|---|
| Bis-phenol F diglycidyl ether | EPIKOTE 862 | 14.2 |
| Cashew nutshell liquid | ROYOXY RAD-913 | 2.7 |
| Glass fiber | CHOPVANTAGE 3156 | 1.7 |
| Silica | FUMED SILICA | 0.5 |
| Aluminum oxide | CALCINED ALUMINA | 0.5 |
| Castor oil derivative | THIXATROL ST | 0.2 |
| Ammonium polyphosphate | EXOLIT AP 422 | 51.1 |
| Titanium dioxide | TI-PURE R-706 | 7.2 |

### Formulation 13- hardener (base: hardener = 4:1)

| Component | Trade name | Weight% in set |
|---|---|---|
| (tris-2,4,6-dimethylaminomethyl phenol) | Accelerator 960-1 | 1.1 |
| Polyamide amine | Aradur 140 | 12.2 |
| Castor oil derivative | THIXATROL ST | 0.1 |
| Melamine | Recrystallized melamine | 8.5 |

**TABLE 1**

| Formula tion | APP (wt%) | Al(OH)₃ (wt%) | Al₂O₃ (wt%) | SiO₂ (wt%) | TiO₂ (wt%) | Borates (wt%) | thicknes s (µm) | expansio n coefficie nt | Temp. after 10 min ( °C) | Picture of char |
|---|---|---|---|---|---|---|---|---|---|---|
| 1* | 15.2 | 0 | 0 | 0 | 0 | 31.2 | 500 | 2~3 | 510 | 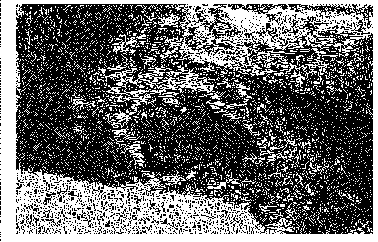 |
| 2* | 15.2 | 0 | 0 | 0 | 2.7 | 29.4 | 500 | 2~3 | 430 | 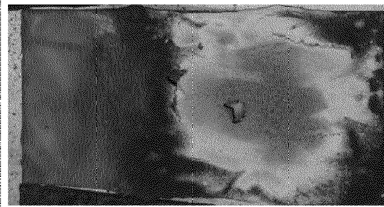 |
| 3* | 15.2 | 0 | 0 | 0 | 4.6 | 27.5 | 500 | 2~3 | 460 | 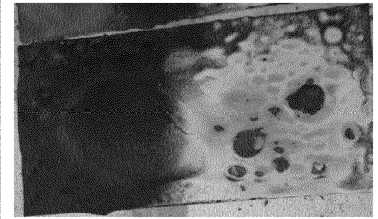 |
| 4* | 15.7 | 0 | 0 | 0 | 5.9 | 18.5 | 500 | 3~4 | 470 | 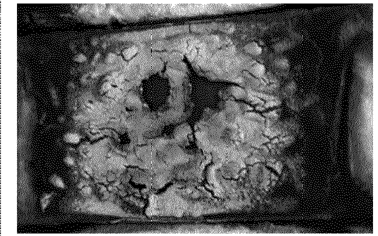 |
| 5 | 29.3 | 0 | 0 | 0 | 5.9 | 19.6 | 500 | 5 | 400 | 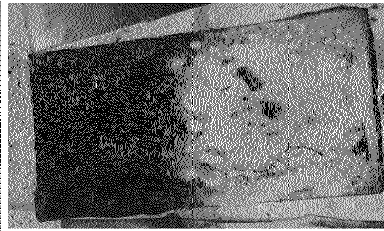 |
| 6 | 35.3 | 0 | 0 | 0 | 9.2 | 10.3 | 500 | 8 | 350 | 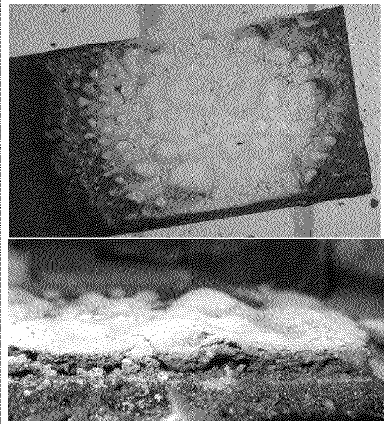 |
| 7 | 40.7 | 0 | 0 | 0 | 13.3 | 14.5 | 500 | 10 | 320 | 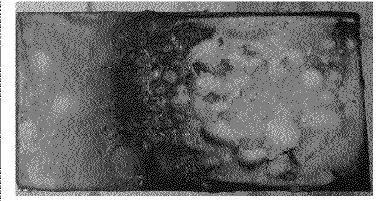 |
| 8* | 52.1 | 0 | 0 | 0 | 7.2 | 0 | 500 | 30 | 440 | 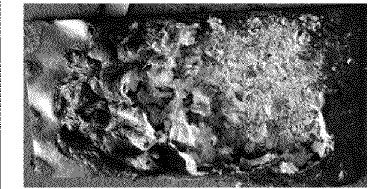 |
| 9 | 51.9 | 0.2 | 0 | 0 | 7.2 | 0 | 500 | 10 | 320 | 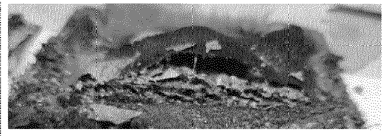 |
| 10 | 42.6 | 9.5 | 0 | 0 | 7.2 | 0 | 500 | 8 | 350 | 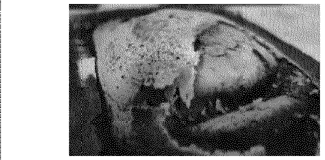 |
| 11 | 51.9 | 0 | 0.2 | 0 | 7.2 | 0 | 500 | 15 | 330 | 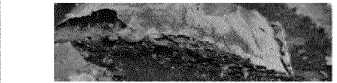 |
| 12 | 51.6 | 0 | 0 | 0.5 | 7.2 | 0 | 500 | 20 | 340 | 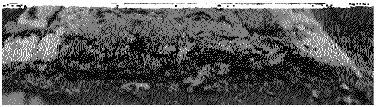 |
| 13 | 51.1 | 0 | 0.5 | 0.5 | 7.2 | 0 | 500 | 20 | 330 | 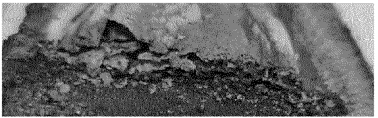 |

| | | | | | | | | | | |
|---|---|---|---|---|---|---|---|---|---|---|
| *: Comparative Example (not according to the invention) | | | | | | | | | | |

As can be seen from the above results, Formulation 1 with borate but no TiO₂ and APP less than 20 wt % gave an unacceptable char that did not expand sufficiently and that did not adhere to the substrate after expansion. Similar results were seen for Formulations 2, 3 and 4, in which less than 5 wt% TiO₂ and/or less than 20 wt% of APP was used; the char there failed to have adequate expansion, and no left over of char was found on the exposed substrate, indicating poor substrate adhesion of the char. Formulation 8, with TiO₂ but no borate also gave unacceptable results in that the expansion was too extensive, resulting in low char density, and consequently removal of char layer by torch flame blow. Formulations 5, 6 and 7, in which the amount of TiO₂ and borate were each within the range of 5 -20 wt% and APP within the range of 25 -55 wt %, based on total solid weight, gave both acceptable char and acceptable adhesion, even under 2 bar of flame blow pressure at 15 mm torch diameter. A clear example of "good adhesion" can be in the second picture of formulation 6, where the cross section of the char is shown; the char was dense and no clear detachment from the substrate was visible. Formulations 9 through 13, with the recited amounts of TiO₂, APP, aluminum source and/or silica source also gave acceptable char and adhesion results.

Whereas particular examples of this invention have been described above for purposes of illustration, it will be evident to those skilled in the art that numerous variations of the details of the present invention may be made without departing from the invention as defined in the appended claims.

## Claims

1. The present invention is directed to a coating composition comprising:
a) a film-forming component, wherein the film-forming component comprises an epoxy resin and optionally a crosslinker therefor;
b) a phosphate source;
c) a borate source; an aluminum source; and/or a silica source;
d) TiO₂; and
e) a gas source, wherein the gas source provides an expansion gas upon thermal decomposition;
wherein the TiO₂ is present in an amount of 5 to 20 wt %, such as 9 to 15 wt %, the phosphate source is present in an amount of 25 to 55 wt %, such as 25 to 40 wt % or 40 to 55 wt %, and wherein if component c comprises a borate source, it is present in an amount of 5 to 20 wt %, such as 9 to 15 wt %, if component c comprises an aluminum source, it is present in an amount of 0.1 to 10 wt %, such as 0.2 to 8 wt % , and if component c comprises a silica source, it is present in an amount of 0.1 to 2 wt %, such 0.4 to 1 wt %, with wt % based on the total solid weight of the composition.

2. The coating composition of Claim 1, wherein the film-forming component is present in an amount of 20-60 wt % and/or the gas source is present in an amount of 1-10 wt%, with wt% based on the total solid weight of the composition.

3. The coating composition of any preceding claim, further comprising:
- fibers, such as glass fibers and/or mineral fibers, in an amount of up to 4 wt%, with wt% based on the total solid weight of the composition, and/or
- one or more additives in a total amount of 2-20 wt %, with wt% based on the total solid weight of the composition.

4. The coating composition of any preceding claim in which the film-forming component comprises an epoxy resin and amine crosslinker, the phosphate source comprises an ammonium phosphate, triphenyl phosphate, and/or tri(2-chloroisopropyl)phosphate, the borate source, if used, comprises metal borate, ammonium pentaborate, and/or boric acid, and the gas source comprises melamine, urea, and/or expandable graphite, the aluminum source, if used, comprises aluminum hydroxide and/or aluminum oxide and the silica source, if used, comprises fumed silica.

5. A self-supported film or sheet formed from the coating composition of any preceding claim.

6. A method for coating a substrate comprising applying to at least a portion of the substrate the coating composition according to any of Claims 1-4 or the film or sheet of claim 5.

7. The method of Claim 6 wherein the substrate comprises metal, such as aluminum or steel, or plastic, such as polycarbonate.

8. A substrate coated according to the method of any of Claims 6 or 7.

9. An article comprising the substrate of Claim 8.

10. The article of Claim 9, wherein the article comprises a vehicle, a structure or a lithium ion battery, wherein the battery comprises exterior wall elements defining a housing and optionally interior wall elements, wherein the coating composition or film or sheet is at least partially applied to the external and/or internal side of any of the exterior wall elements and/or to any side of any of the interior wall elements, if present.

11. The article of Claim 10, wherein any of the exterior wall and/or interior wall elements comprises composite, steel, aluminum and/or polycarbonate.

12. The article of any one of Claims 9-11, wherein the battery is a battery pack comprising a plurality of individual battery cells, wherein the coating composition or film or sheet is positioned to thermally insulate at least two of the individual battery cells from each other in the expanded and optionally charred state; and wherein the battery optionally comprises one or more additional fire retardant materials and/or fire mitigation means.

13. The article according to Claim 9, wherein the article is a battery component coated at least in part with the coating composition of any of Claims 1-4 or to which has been applied the film or sheet of Claim 5.

14. The battery component of Claim 13, wherein the battery component comprises an electric vehicle battery component.

15. The battery component of Claims 13 or 14, wherein the battery component comprises a battery cell, a battery shell, a battery module a battery pack, a battery box, a battery cell casing, a pack shell, a battery lid and tray, a thermal management system, a battery housing, a module housing, a module racking, a battery side plate, a battery cell enclosure, a cooling module, a cooling tube, a cooling fin, a cooling plate, a bus bar, a battery frame, an electrical connection, metal wires, copper or aluminum conductors or cables, or any combination thereof.

## Patentansprüche

1. Die vorliegende Erfindung bezieht sich auf eine Beschichtungszusammensetzung umfassend:
a) eine filmbildende Komponente, wobei die filmbildende Komponente ein Epoxidharz und wahlweise einen Vernetzer dafür umfasst;
b) eine Phosphatquelle;
c) eine Boratquelle, eine Aluminiumquelle und/oder eine Siliciumdioxidquelle;
d) TiO₂; und
e) eine Gasquelle, wobei die Gasquelle ein Expansionsgas bei thermischer Zersetzung bereitstellt;
wobei das TiO₂ in einer Menge von 5 bis 20 Gew.-%, wie etwa 9 bis 15 Gew.-%, vorhanden ist, die Phosphatquelle in einer Menge von 25 bis 55 Gew.-%, wie etwa 25 bis 40 Gew.-% oder 40 bis 55 Gew.-%, vorhanden ist, und wobei, wenn Komponente c eine Boratquelle umfasst, diese in einer Menge von 5 bis 20 Gew.-%, wie etwa 9 bis 15 Gew.-%, vorhanden ist, wenn Komponente c eine Aluminiumquelle umfasst, diese in einer Menge von 0,1 bis 10 Gew.-%, wie etwa 0,2 bis 8 Gew.-%, vorhanden ist, und wenn Komponente c eine Siliciumdioxidquelle umfasst, diese in einer Menge von 0,1 bis 2 Gew.-%, wie etwa 0,4 bis 1 Gew.-%, vorhanden ist, wobei die Gew.-% auf dem Gesamtfeststoffgewicht der Zusammensetzung basieren.

2. Die Beschichtungszusammensetzung des Anspruchs 1, wobei die filmbildende Komponente in einer Menge von 20 bis 60 Gew.-% vorhanden ist und/oder die Gasquelle in einer Menge von 1 bis 10 Gew.-% vorhanden ist, wobei die Gew.-% auf dem Gesamtfeststoffgewicht der Zusammensetzung basieren.

3. Die Beschichtungszusammensetzung gemäß irgendeinem der vorstehenden Ansprüche, des Weiteren umfassend:
- Fasern, wie etwa Glasfasern und/oder Mineralfasern in einer Menge von bis zu 4 Gew.-%, wobei die Gew.-% auf dem Gesamtfeststoffgewicht der Zusammensetzung basieren, und/oder
- ein oder mehrere Additive in einer Gesamtmenge von 2 bis 20 Gew.-%, wobei die Gew.-% auf dem Gesamtfeststoffgewicht der Zusammensetzung basieren.

4. Die Beschichtungszusammensetzung gemäß irgendeinem der vorstehenden Ansprüche, in welcher die filmbildende Komponente ein Epoxidharz und einen Aminvernetzer umfasst, die Phosphatquelle ein Ammoniumphosphat, Triphenylphosphat und/oder Tri(2-chlorisopropyl)phosphat umfasst, die Boratquelle, falls verwendet, Metallborat, Ammoniumpentaborat und/oder Borsäure umfasst, und die Gasquelle Melamin, Harnstoff und/oder expandierbares Graphit umfasst, die Aluminiumquelle, falls verwendet, Aluminiumhydroxid und/oder Aluminiumoxid umfasst und die Siliciumdioxidquelle, falls verwendet, pyrogene Kieselsäure umfasst.

5. Ein selbsttragender Film oder eine Lage, gebildet aus der Beschichtungszusammensetzung gemäß irgendeinem der vorstehenden Ansprüche.

6. Ein Verfahren zum Beschichten eines Substrats umfassend ein Aufbringen der Beschichtungszusammensetzung gemäß irgendeinem der Ansprüche 1 bis 4 oder des Films oder der Lage gemäß Anspruch 5 auf wenigstens einen Teil des Substrats.

7. Das Verfahren des Anspruchs 6, wobei das Substrat Metall umfasst, wie etwa Aluminium oder Stahl, oder Kunststoff, wie etwa Polycarbonat.

8. Ein Substrat, beschichtet nach dem Verfahren gemäß irgendeinem der Ansprüche 6 oder 7.

9. Ein Gegenstand umfassend das Substrat des Anspruchs 8.

10. Der Gegenstand des Anspruchs 9, wobei der Gegenstand ein Fahrzeug, eine Struktur oder eine Lithiumionenbatterie umfasst, wobei die Batterie äußere Wandelemente definierend ein Gehäuse und wahlweise innere Wandelemente umfasst, wobei die Beschichtungszusammensetzung oder der Film oder die Lage wenigstens teilweise auf die äußere und/oder innere Seite von irgendeinem der äußeren Wandelemente und/oder auf irgendeine Seite von irgendeinem der inneren Wandelemente, falls vorhanden, aufgebracht ist.

11. Der Gegenstand des Anspruchs 10, wobei irgendeine von den äußeren Wand- und/oder inneren Wandelementen ein Verbundmaterial, Stahl, Aluminium und/oder Polycarbonat umfasst.

12. Der Gegenstand gemäß irgendeinem der Ansprüche 9 bis 11, wobei die Batterie ein Batteriepack umfassend eine Mehrzahl an individuellen Batteriezellen ist, wobei die Beschichtungszusammensetzung oder der Film oder die Lage positioniert ist, um im expandierten und wahlweise verkohlten Zustand wenigstens zwei der individuellen Batteriezellen thermisch voneinander zu isolieren, und wobei die Batterie wahlweise ein oder mehrere feuerhemmende Materialien und/oder Brandbekämpfungsmittel umfasst.

13. Der Gegenstand gemäß Anspruch 9, wobei der Gegenstand eine Batteriekomponente ist, die wenigstens zum Teil mit der Beschichtungszusammensetzung gemäß irgendeinem der Ansprüche 1 bis 4 beschichtet ist oder auf welche der Film oder die Lage nach Anspruch 5 appliziert wurde.

14. Die Batteriekomponente des Anspruchs 13, wobei die Batteriekomponente eine Batteriekomponente für ein elektrisches Fahrzeug umfasst.

15. Die Batteriekomponente des Anspruchs 13 oder 14, wobei die Batteriekomponente eine Batteriezelle, eine Batteriehülle, ein Batteriemodul, einen Batteriepack, eine Batteriebox, ein Batteriezellgehäuse, eine Packhülle, ein Batteriedeckel und -fach, ein thermisches Managementsystem, ein Batteriegehäuse, ein Modulgehäuse, ein Modul-Rack, eine Batterieseitenplatte, eine Batteriezelleinhausung, ein Kühlmodul, ein Kühlrohr, eine Kühlrippe, eine Kühlplatte, eine Stromschiene, ein Batterierahmen, eine elektrische Verbindung, Metalldrähte, Kupfer- oder Aluminiumleiter oder -kabel oder irgendeine Kombination davon, umfasst.

## Revendications

1. La présente invention concerne une composition de revêtement comprenant :
a) un composant filmogène, dans lequel le composant filmogène comprend une résine époxy et éventuellement un agent de réticulation ;
b) une source de phosphate
c) une source de borate ; une source d'aluminium ; et/ou une source de silice ;
d) du TiO₂ ; et
e) une source de gaz, dans laquelle la source de gaz fournit un gaz d'expansion lors de la décomposition thermique ;
dans laquelle le TiO₂ est présent en une quantité de 5 à 20 % en poids, par exemple de 9 à 15 % en poids, la source de phosphate est présente en une quantité de 25 à 55 % en poids, par exemple de 25 à 40 % en poids ou de 40 à 55 % en poids, et dans laquelle si le composant c comprend une source de borate, il est présent en une quantité de 5 à 20 % en poids, par exemple de 9 à 15 % en poids, si le composant c comprend une source d'aluminium, il est présent en une quantité de 0,1 à 10 % en poids, par exemple de 0,2 à 8 % en poids, et si le composant c comprend une source de silice, il est présent en une quantité de 0,1 à 2 % en poids, par exemple de 0,4 à 1 % en poids, le pourcentage en poids étant basé sur le poids total des matières solides de la composition.

2. Composition de revêtement selon la revendication 1, dans laquelle le composant filmogène est présent en une quantité de 20 à 60 % en poids et/ou la source de gaz est présente en une quantité de 1 à 10 % en poids, le pourcentage en poids étant basé sur le poids total des matières solides de la composition.

3. Composition de revêtement selon l'une quelconque des revendications précédentes, comprenant en outre :
- des fibres, telles que des fibres de verre et/ou des fibres minérales, en une quantité allant jusqu'à 4 % en poids, le pourcentage en poids étant basé sur le poids total des matières solides de la composition, et/ou
- un ou plusieurs additifs en une quantité totale de 2 à 20 % en poids, le pourcentage en poids étant basé sur le poids total des matières solides de la composition.

4. Composition de revêtement selon l'une quelconque des revendications précédentes dans laquelle le composant filmogène comprend une résine époxy et un agent de réticulation de type amine, la source de phosphate comprend un phosphate d'ammonium, un phosphate de triphényle, et/ou un phosphate de tri(2-chloroisopropyle), la source de borate, en cas d'utilisation, comprend un borate de métal, du pentaborate d'ammonium, et/ou de l'acide borique, et la source de gaz comprend de la mélamine, de l'urée et/ou du graphite expansible, la source d'aluminium, en cas d'utilisation, comprend de l'hydroxyde d'aluminium et/ou de l'oxyde d'aluminium et la source de silice, en cas d'utilisation, comprend de la silice pyrogénée.

5. Film ou plaque autoportant(e) formé(e) à partir de la composition de revêtement selon l'une quelconque des revendications précédentes.

6. Procédé de revêtement d'un substrat comprenant le fait d'appliquer sur au moins une partie du substrat la composition de revêtement selon l'une quelconque des revendications 1 à 4 ou le film ou la plaque selon la revendication 5.

7. Procédé selon la revendication 6, dans lequel le substrat comprend du métal, tel que de l'aluminium ou de l'acier, ou du plastique, tel que le polycarbonate.

8. Substrat revêtu conformément au procédé selon l'une quelconque des revendications 6 ou 7.

9. Article comprenant le substrat selon la revendication 8.

10. Article selon la revendication 9, dans lequel l'article comprend un véhicule, une structure ou une batterie au lithium-ion, dans lequel la batterie comprend des éléments de paroi extérieure définissant un logement et éventuellement des éléments de paroi intérieure, dans lequel la composition de revêtement, le film ou la plaque est au moins partiellement appliqué(e) sur la surface interne et/ou externe de n'importe quel élément de la paroi extérieure et/ou sur n'importe quelle surface de n'importe quel élément de la paroi intérieure, le cas échéant.

11. Article selon la revendication 10, dans lequel l'un des éléments de la paroi extérieure et/ou de la paroi intérieure comprend un matériau composite, de l'acier, de l'aluminium et/ou du polycarbonate.

12. Article selon l'une quelconque des revendications 9 à 11, dans lequel la batterie est un ensemble de batteries comprenant plusieurs éléments de batterie individuels, dans lequel la composition de revêtement, le film ou la plaque est positionné(e) de manière à isoler thermiquement l'un de l'autre au moins deux des éléments de batterie individuels à l'état expansé et éventuellement calciné ; et dans lequel la batterie comprend éventuellement un ou plusieurs matériaux ignifuges supplémentaires et/ou des dispositifs d'atténuation d'incendie.

13. Article selon la revendication 9, dans lequel l'article est un composant de batterie revêtu au moins en partie de la composition de revêtement selon l'une quelconque des revendications 1 à 4 ou sur lequel a été appliqué le film ou la plaque selon la revendication 5.

14. Composant de batterie selon la revendication 13, dans lequel le composant de batterie comprend un composant de batterie pour véhicule électrique.

15. Composant de batterie selon les revendications 13 ou 14, dans lequel le composant de batterie comprend un élément de batterie, une coque de batterie, un module de batterie, un ensemble de batteries, un coffre de batterie, un boîtier d'élément de batterie, un ensemble de coques, un couvercle et un plateau de batterie, un système de gestion thermique, un boîtier de batterie, un boîtier de module, un rayonnage de module, une plaque latérale de batterie, une enceinte d'élément de batterie, un module de refroidissement, un tube de refroidissement, une ailette de refroidissement, une plaque de refroidissement, une barre omnibus, un cadre de batterie, une connexion électrique, des fils métalliques, des conducteurs ou des câbles en cuivre ou en aluminium, ou toute combinaison de ces éléments.
